# EUROPEAN PATENT SPECIFICATION

(11) **EP 2 252 661 B1**
(45) Date of publication and mention of the grant of the patent: **05.10.2016**
(21) Application number: 09718754.6
(22) Date of filing: 12.03.2009
(51) Int. Cl.: C08F 2/50, C09D 4/06, C09D 171/00, C09D 151/00

(54) **HYDROPHILIC COATING**
HYDROPHILE BESCHICHTUNG
REVÊTEMENT HYDROPHILE

(30) Priority: 12.03.2008 WO PCT/EP2008/052942
(43) Date of publication of application: 24.11.2010
(73) Proprietor: DSM IP Assets B.V., 6411 TE Heerlen (NL)
(72) Inventor: ROOIJMANS, Marnix, 6100 AA Echt (NL); GELLING, Onko Jan, 6100 AA Echt (NL); ZWAAG, VAN DER, Jitske, 6100 AA Echt (NL)
(74) Representative: Scheltus, Irma
(86) International application number: PCT/EP2009/052918
(87) International publication number: WO 2009/112548

(56) References cited:
- EP-A- 0 405 464
- WO-A-2007/065722
- WO-A-2008/031596
- WO-A-2008/104573

## Description

This invention relates to a coating formulation for preparing a hydrophilic coating. The invention further relates to a hydrophilic coating, a lubricious coating, an article and a method of forming a hydrophilic coating on a substrate.

Many medical devices, such as guide wires, urinary and cardiovascular catheters, syringes, and membranes need to have a lubricant applied to the outer and/or inner surface to facilitate insertion into and removal from the body and/or to facilitate drainage of fluids from the body. Lubricious properties are also required so as to minimize soft tissue damage upon insertion or removal. Especially, for lubrication purposes, such medical devices may have a hydrophilic surface coating or layer which becomes lubricious and attains low-friction properties upon wetting, i.e. applying a wetting fluid for a certain time period prior to insertion of the device into the body of a patient. A coating or layer which becomes lubricious after wetting is hereinafter referred to as a hydrophilic coating. A coating obtained after wetting is hereinafter referred to as a lubricious coating.

For most medical applications robustness of the coating is one of the most important requirements. In order to achieve sufficient robustness, multifunctional polymerizable compounds, which are polymerized upon curing in the presence of an initiator, are frequently applied in the coating formulation. Apart from improved robustness, the use of a multifunctional polymerizable compound may offer a controllable network which will allow tuned release of active substances, for example anti-microbial agents and drugs.

The inventors have found that many coatings comprising a multifunctional polymerizable compound show inferior coating performance. Typically such coatings tend to degrade within a given time, particularly in a hydrated environment, causing increase in extractables or leachables. Such extractables or leachables may comprise low molecular and/or polymeric compounds and/or particles which may be vital to the function of the coating. The extractables or leachables may have for example an antimicrobial, anti-thrombogenic, imaging, bioactive, and/or signaling function. Degradation of said coatings typically results in loss of properties such as ability to hydrate and maintain hydration, loss of lubricious properties, loss of patient comfort, loss of imaging properties, increased risk of infection due to the residue being left on the tissue surface, uncontrolled release and co-elution problems for biologically active components, and/or lack of mechanical robustness, as demonstrated by the fact that parts of the coating are easily removed from the coated article upon rubbing. In addition to degradation problems lubricious coatings are often prone to wear and as such may lose coating material in the tortuous path (e.g. in a blood vessel).

Therefore it is an object of the present invention to provide a robust and consistent coating with an improved wear resistance.

Surprisingly it has now been found that a robust and consistent lubricious coating with an improved wear resistance can be obtained by using a coating formulation for preparing a hydrophilic coating, according to claims 1 to 9, wherein the hydrophilic coating formulation comprises
(a) at least one multifunctional polymerizable compound according to formula (1) 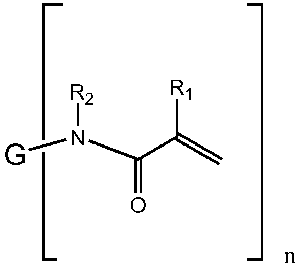 wherein G is a residue of a polyfunctional compound having at least n functional groups; wherein each R₁ and each R₂ independently represents hydrogen or a group selected from substituted and unsubstituted hydrocarbons which optionally contain one or more heteroatoms, preferably hydrogen or a C1-C20 hydrocarbon, more preferably hydrogen or a C1-C20 alkyl; and wherein n is an integer having a value of at least 2, preferably 2-100, more preferably 2-8, in particular 2 or 3;
(b) at least one Norrish Type I photoinitiator; and
(c) at least one Norrish Type II photoinitiator

It has been found that the hydrophilic coatings, according to claim 10, obtainable by curing the hydrophilic coating formulation according to the invention are robust and wear resistant in tortuous tests compared to similar coatings known in the art. For example, subjecting the coatings according to the invention to a particulates release test, as described in the examples, results in a surprisingly low number of particles released from the coating. This is particularly advantageous for cardiovascular applications such as guide wires and catheters, in which the hydrophilic coating experiences serious torture and no particle release is tolerated. Preferably, a wear resistance, as measured according to the particulates release wear test, corresponding to less than 3000, more preferably less than 2000, most preferably less than 1000, in particular less than 500 particles larger than 10 µm.

Within the context of the invention "lubricious" is defined as having a slippery surface. A coating on the outer or inner surface of a medical device, such as a catheter, is considered lubricious if (when wetted) it can be inserted into the intended body part without leading to injuries and/or causing unacceptable levels of discomfort to the subject. In particular, a coating is considered lubricious if it has a friction as measured on a Harland FTS5000 Friction Tester (HFT) of 20 g or less, preferably of 15 g or less, at a clamp-force of 300 g, a pull speed of 1 cm/s, and a temperature of 22°C. The term "wetted" is generally known in the art and - in a broad sense - means "containing water". In particular the term is used herein to describe a coating that contains sufficient water to be lubricious. In terms of the water concentration, usually a wetted coating contains at least 10 wt% of water, based on the dry weight of the coating, preferably at least 50 wt%, based on the dry weight of the coating, more preferably at least 100 wt% based on the dry weight of the coating. For instance, in a particular embodiment of the invention a water uptake of about 300-500 wt% water is feasible. Examples of wetting fluids are treated or untreated water, water-containing mixtures with for example organic solvents or aqueous solutions comprising for example salts, proteins or polysaccharides. In particular a wetting fluid can be a body fluid.

The Norrish Type I and Norrish Type II photoinitiators b) and c) are used to cure the hydrophilic coating formulation according to the invention using electromagnetic radiation, for example using visible light or UV, electro-beam, or gamma radiation to form the hydrophilic coating. Herein both Norrish Type I and Norrish Type II photoinitiators are free-radical photoinitiators, but are distinguished by the process by which the initiating radicals are formed. Compounds that undergo unimolecular bond cleavage of the chromophore upon irradiation to generate radicals that initiate polymerization are termed Norrish Type I or homolytic photoinitiators. A Norrish Type II photoinitiator generates radicals indirectly by hydrogen abstraction from a suitable synergist, which may be a low molecular weight compound or a polymer.

Compounds that undergo unimolecular bond cleavage upon irradiation are termed Norrish Type I or homolytic photoinitiators, as shown by formula (1):

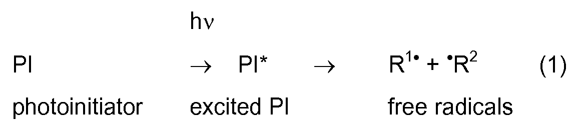

Depending on the nature of the functional group and its location in the molecule relative to the carbonyl group, the fragmentation can take place at a bond adjacent to the carbonyl group (α-cleavage), at a bond in the β-position (β-cleavage) or, in the case of particularly weak bonds (like C-S bonds or O-O bonds), elsewhere at a remote position. The most important fragmentation in photoinitiator molecules is the α-cleavage of the carbon-carbon bond between the carbonyl group and the alkyl residue in alkyl aryl ketones, which is known as the Norrish Type I reaction.

If the photoinitiator, while being in the excited state, interacts with a second molecule (a coinitiator COI) to generate radicals in a bimolecular reaction as shown by formula (2), the photoinitiator is termed a NorrishType II photoinitiator. In general, the two main reaction pathways for Norrish Type II photoinitiators are hydrogen abstraction by the excited initiator or photoinduced electron transfer, followed by fragmentation. Bimolecular hydrogen abstraction is a typical reaction of excited diaryl ketones. Photoinduced electron transfer is a more general process, which is not limited to a certain class of compounds.

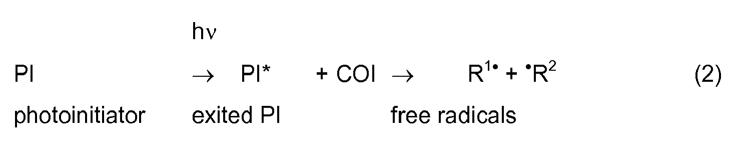

Examples of suitable Norrish Type I or free-radical photoinitiators are benzoin derivatives, methylolbenzoin and 4-benzoyl-1,3-dioxolane derivatives, benzilketals, α,α-dialkoxyacetophenones, α-hydroxy alkylphenones, α-aminoalkylphenones, acylphosphine oxides, bisacylphosphine oxides, acylphosphine sulphides, halogenated acetophenone derivatives, and the like. Commercial examples of suitable Type I photoinitiators are Irgacure 2959 (2-hydroxy-4'-(2-hydroxyethoxy)-2-methyl propiophenone), Irgacure 651 (benzildimethyl ketal or 2,2-dimethoxy-1,2-diphenylethanone, Ciba-Geigy), Irgacure 184 (1-hydroxy-cyclohexyl-phenyl ketone as the active component, Ciba-Geigy), Darocur 1173 (2-hydroxy-2-methyl-1-phenylpropan-1-one as the active component, Ciba-Geigy), Irgacure 907 (2-methyl-1-[4-(methylthio)phenyl]-2-morpholino propan-1-one, Ciba-Geigy), Irgacure 369 (2-benzyl-2-dimethylamino-1-(4-morpholinophenyl)-butan-1-one as the active component, Ciba-Geigy), Esacure KIP 150 (poly {2-hydroxy-2-methyl-1-[4-(1-methylvinyl)phenyl]propan-1-one}, Fratelli Lamberti), Esacure KIP 100 F (blend of poly {2-hydroxy-2-methyl-1-[4-(1-methylvinyl)phenyl]propan-1-one} and 2-hydroxy-2-methyl-1-phenyl-propan-1-one, Fratelli Lamberti), Esacure KTO 46 (blend of poly {2-hydroxy-2-methyl-1-[4-(1-methylvinyl)phenyl]propan-1-one}, 2,4,6-trimethylbenzoyldiphenyl-phosphine oxide and methylbenzophenone derivatives, Fratelli Lamberti), acylphosphine oxides such as Lucirin TPO (2,4,6-trimethylbenzoyl diphenyl phosphine oxide, BASF), Irgacure 819 (bis (2,4,6-trimethylbenzoyl)-phenyl-phosphine-oxide, Ciba-Geigy), Irgacure 1700 (25:75% blend of bis (2,6-dimethoxybenzoyl)2,4,4-trimethylpentyl phosphine oxide and 2-hydroxy-2-methyl-1-phenyl-propan-1-one, Ciba-Geigy), and the like. Also mixtures of type I photoinitiators can be used.

Examples of Norrish Type II photoinitiators that can be used in the hydrophilic coating formulation according to the invention include aromatic ketones such as benzophenone, xanthone, derivatives of benzophenone (e.g. chlorobenzophenone), blends of benzophenone and benzophenone derivatives (e.g. Photocure 81, a 50/50 blend of 4-methyl-benzophenone and benzophenone), Michler's Ketone, Ethyl Michler's Ketone, thioxanthone and other xanthone derivatives like Quantacure ITX (isopropyl thioxanthone), benzil, anthraquinones (e.g. 2-ethyl anthraquinone), coumarin, or chemical derivatives or combinations of these photoinitiators.

Preferred are Norrish Type I and Norrish Type II photoinitiators which are water-soluble or can be adjusted to become water-soluble, also preferred photoinitiators are polymeric or polymerisable photoinitiators.

Generally the total amount of photoinitiator in the hydrophilic coating formulation is between 0.2 and 10 wt%, preferably between 0.8 and 8 wt%, based on the total weight of dry the coating.

Hereinafter all percentages of components given in the application are based on the total weight of the dry coating. i.e. the hydrophilic coating formed upon curing the hydrophilic coating formulation.

Typically the weight ratio Norrish Type I photoinitiator: Norrish Type II photoiniatiator is between 10:1 and 1:10, between 7:1 and 1:7 or between 5:1 and 1:5.

The multifunctional polymerizable compound (a) may be used in more than 0 %, based on the total weight of the dry coating, for example more than 1 %, or more than 2%. The multifunctional polymerizable compound can be present in the coating formulation up to 100%, 90 %, 80 %, 70 %, 60 % or 50, based on the total weight of the dry coating. The skilled person can vary the amount of multifunctional polymerizable compound within the above ranges to obtain the desired properties for his application.

Generally multifunctional polymerizable compound (a) has a number average molecular weight (Mn) of 500 g/mol or more, preferably 750 g/mol or more, more preferably 1000 g/mol or more. Generally multifunctional polymerizable compound (a) has a number average molecular weight (Mn) of 100,000 g/mol or less, preferably 10,000 g/mol or less, more preferably 6,000 g/mol or less, in particular 2,000 g/mol or less. Multifunctional polymerizable compounds with an Mn within the preferred ranges show a favorable cross-link density, i.e. open enough to give room to functional components and dense enough to provide sufficient mechanical robustness.

Apart for multifunctional polymerizable compound (a) as defined above, i.e. with n ≤2, the composition may also comprise species according to formula (1) wherein n = 1, i.e. molecules comprising only one reactive moiety. These monofunctional molecules may also be part of the network formed after curing. The average number of reactive moieties per molecule according to formula (1) is preferably in the range of 1.2 to 64, more preferably in the range of 1.2 to 16, most preferably in the range of 1.2 to 8.

In one embodiment of the invention multifunctional polymerizable compound (a) is soluble in a polar solvent. Within the context of the invention this means that according to this embodiment at least 1 g, preferably at least 3 g, more preferably at least 5 g, in particular at least 10 g of multifunctional polymerizable compound (a) can be dissolved in 100 g of the polar solvent at 25 °C. Examples of suitable polar solvents include water and C1-C6 alcohols, in particular methanol, ethanol, propanol, isopropanol, butanol, isobutanol and t-butanol.

In one embodiment of the invention G comprises at least one moiety containing a heteroatom. Within the context of the invention a heteroatom is understood to be a non-carbon, non-hydrogen atom. Examples of suitable hereoatoms include oxygen atoms (O), nitrogen atoms (N), sulfur atoms (S) and phosphor atoms (P).

In one embodiment of the invention G is a residue of a hydrophilic polyfunctional compound, preferably chosen from the group consisting of polyethers, polyesters, polyurethanes, polyepoxides, polyamides, poly(meth)acrylamides, poly(meth)acrylics, polyoxazolidones, polyvinyl alcohols, polyethylene imines, polypeptides and polysaccharides, such as cellulose or starch or any combination of the above, more preferably a polymer comprising at least one polyethylene glycol or polypropylene glycol block. The use of a hydrophilic polyfuctional compound is particularly advantageous if the coating needs to have hydrophilic and/or lubricious properties.

In multifunctional polymerizable compound (a) of formula (1) R₁ preferably represents hydrogen, CH₃ or CH₂OH. Particularly suitable are multifunctional polymerizable compounds wherein R₁ and R₂ both represent hydrogen or wherein R₁ represents CH₃ and R₂ represents hydrogen.

Examples of suitable multifunctional polymerizable compounds according to the invention are polyether based (meth)acrylamides, for example polyethylene glycol diacrylamide and polyethylene glycol dimethacrylamide. Commercially available polyether multifunctional amines which can be used to produce multifunctional (meth)acrylamide multifunctional polymerizable compounds include poly(ethylene glycol) bis(3-aminopropyl) terminated, Mw = 1500 (Aldrich); PEG diamine (purely ethylene oxide units) P2AM-2 (molecular weight 2K), P2AM-3 (3.4K), P2AM-6 (6K), P2AM-8 (8K) and P2AM-10 (10K) (Sunbio), JEFFAMINE® D-230 polyetheramine, JEFFAMINE® D-400 polyetheramine, JEFFAMINE® D-2000, JEFFAMINE® D-4000, JEFFAMINE® XTJ-500 (ED-600), JEFFAMINE® XTJ D501 (ED-900), JEFFAMINE® XTJ-502 (ED-2003), JEFFAMINE® XTJ-590 diamine, JEFFAMINE® XTJ-542 diamine, JEFFAMINE® XTJ-548 diamine, JEFFAMINE® XTJ-559 diamine, JEFFAMINE® XTJ-556 diamine, JEFFAMINE® SD-231 (XTJ584), JEFFAMINE® SD401 (XTJ-585), JEFFAMINE® T-403 polyetheramine, JEFFAMINE® XTJ-509 polyoxypropylenetriamine, JEFFAMINE® T-5000 polyetheramine, and JEFFAMINE® ST-404 polyetheramine (XTJ-586).

Within the context of the invention the term polymer is used for a molecule comprising two or more repeating units. In particular it may be composed of two or more monomers which may be the same or different. As used herein, the term includes oligomers and prepolymers. Usually polymers have a number average weight (Mₙ) of about 500 g/mol or more, in particular of about 1000 g/mol or more, although the Mₙ may be lower in case the polymer is composed of relatively small monomeric units. Herein and hereinafter the Mₙ is defined as the Mₙ as determined by light scattering, optionally in combination with Size Exclusion Chromatography (SEC).

In one embodiment of the invention the hydrophilic coating formulation may further comprise a non-ionic hydrophilic polymer. Herein a non-ionic hydrophilic polymer is understood to be a high molecular weight linear, branched or cross-linked polymer composed of macromolecules comprising constitutional units, in which less than 5 % of the constitutional units contain ionized groups when the hydrophilic polymer is in the lubricious coating.

The hydrophilic polymer is capable of providing hydrophilicity to a coating and may be synthetic or bio-derived and can be blends or copolymers of both. The hydrophilic polymers include but are not limited to poly(lactams), for example polyvinylpyrollidone (PVP), polyurethanes, homo- and copolymers of acrylic and methacrylic acid, polyvinyl alcohol, polyvinylethers, maleic anhydride based copolymers, polyesters, vinylamines, polyethyleneimines, polyethyleneoxides, poly(carboxylic acids), polyamides, polyanhydrides, polyphosphazenes, cellulosics, for example methyl cellulose, carboxymethyl cellulose, hydroxymethyl cellulose, and hydroxypropylcellulose, heparin, dextran, polypeptides, for example collagens, fibrins, and elastin, polysacharrides, for example chitosan, hyaluronic acid, alginates, gelatin, and chitin, polyesters, for example polylactides, polyglycolides, and polycaprolactones, polypeptides, for example collagen, albumin, oligo peptides, polypeptides, short chain peptides, proteins, and oligonucleotides.

Generally the hydrophilic polymer has a molecular weight in the range of 8,000 to 5,000,000 g/mol, preferably in the range of 20,000 to 3,000,000 g/mol and more preferably in the range of 200,000 to 2,000,000 g/mol.

In one embodiment of the invention the hydrophilic polymer may be used in more than 1 wt%, for example more than 5 wt%, or more than 50 wt%, based on the total weight of the dry coating. The hydrophilic polymer can be present up to 99 wt%, or up to 95 %, based on the total weight of the dry coating.

The hydrophilic coating formulation according to the invention may also comprise a polyelectrolyte. Herein a polyelectrolyte is understood to be a high molecular weight linear, branched or cross-linked polymer composed of macromolecules comprising constitutional units, in which between 5 and 100 % of the constitutional units contain ionized groups when the polyelectrolyte is in the lubricious coating. Herein a constitutional unit is understood to be for example a repeating unit, for example a monomer. A polyelectrolyte herein may refer to one type of polyelectrolyte composed of one type of macromolecules, but it may also refer to two or more different types of polyelectrolytes composed of different types of macromolecules.

The use of a polyelectrolyte may be considered to improve the lubricity and the dry-out time of the hydrophilic coating. Herein dry-out time is defined as the duration of the hydrophilic coating remaining lubricious in the open air after the device comprising the hydrophilic coating has been taken out of the wetting fluid wherein it has been stored and/or wetted. Hydrophilic coatings with an improved dry-out time, i.e. wherein the duration of the hydrophilic coating remaining lubricious is longer, will have a lower tendency of losing water and drying out prior to insertion into the body, or in the body when it comes in contact with e.g. a mucous membrane or vein. This may result in complications when the device comprising the lubricious coating is inserted into the body or removed from the body. The dry-out time can be determined by measuring the friction in gram as a function of time the catheter had been exposed to air on the HFT.

Considerations when selecting a suitable polyelectrolyte are its solubility and viscosity in aqueous media, its molecular weight, its charge density, its affinity with the supporting network of the coating and its biocompatibility. Herein biocompatibility means biological compatibility by not producing a toxic, injurous or immunological response in living mammalian tissue.

For a decreased migrateability, the polyelectrolyte is preferably a polymer having a weight average molecular weight of at least 1000 g/mol, as determinable by light scattering, optionally in combination with size exclusion chromatography. A relatively high molecular weight polyelectrolyte is preferred for increasing the dry-out time and/or reduced migration out of the coating. The weight average molecular weight of the polyelectrolyte is preferably at least 20,000 g/mol, more preferably at least 100,000 g/mol, even more preferably at least 150,000 g/mol, in particular 200,000 g/mol or more. For ease of applying the coating it is preferred that the average weight is 1000,000 g/mol or less, in particular 500,000 g/mol or less, more in particular 300,000 g/mol or less.

Examples of ionized groups that may be present in the polyelectrolyte are ammonium groups, phosphonium groups, sulfonium groups, carboxylate groups, sulfate groups, sulfinic groups, sulfonic groups, phosphate groups, and phosphonic groups. Such groups are very effective in binding water. In one embodiment of the invention a polyelectrolyte is used that also comprises metal ions. Metal ions, when dissolved in water, are complexed with water molecules to form aqua ions [M(H₂O)ₓ]ⁿ⁺ wherein x is the coordination number and n the charge of the metal ion, and are therefore particularly effective in binding water. Metal ions that may be present in the polyelectrolyte are for example alkali metal ions, such as Na⁺, Li⁺, or K⁺, or alkaline earth metal ions, such as Ca²⁺ and Mg²⁺. In particular when the polyelectrolyte comprises quaternary amine salts, for example quaternary ammonium groups, anions may be present. Such anions can for example be halogenides, such as Cl⁻, Br⁻, I⁻ and F⁻, and also sulphates, nitrates, carbonates and phosphates.

Suitable polyelectrolytes are for example salts of homo- and copolymers of acrylic acid, salts of homo- and co-polymers of methacrylic acid, salts of homo- and co-polymers of maleic acid, salts of homo- and co-polymers of fumaric acid, salts of homo- and co-polymers of monomers comprising sulfonic acid groups, homo- and co-polymers of monomers comprising quarternary ammonium salts and mixtures and/or derivatives thereof. Examples of suitable polyelectrolytes are poly(acrylamide-co-acrylic acid) salts, for example poly(acrylamide-co-acrylic acid) sodium salt, poly(acrylamide-co-methacrylic acid) salts, for example poly(acrylamide-co-methacrylic acid) sodium salt, poly(methacrylamide-co-acrylic acid) salts, for example poly(methacrylamide-co-acrylic acid) sodium salt, poly(methacrylamide-co-methacrylic acid) salts, for example poly(methacrylamide-co-methacrylic acid) sodium salt poly(acrylic acid) salts, for example poly(acrylic acid) sodium salt, poly(methacrylic acid) salts, for example poly(methacrylic acid) sodium salt, poly(acrylic acid-co-maleic acid) salts, for example poly(acrylic acid-co-maleic acid) sodium salt, poly(methacrylic acid-co-maleic acid) salts, for example poly(methacrylic acid-co-maleic acid) sodium salt, poly(acrylamide-co-maleic acid) salts, for example poly(acrylamide-co-maleic acid) sodium salt, poly(methacrylamide-co-maleic acid) salts, for example poly(methacrylamide-co-maleic acid) sodium salt, poly(acrylamido-2-methyl-1-propanesulfonic acid) salts, poly(4-styrene sulfonic acid) salts, poly(acrylamide-co-dialkyl ammonium chloride), quaternized poly[bis-(2-chloroethyl)ether-alt-1,3-bis[3-(dimethylamino)propyl]urea], polyallylammonium phosphate, poly(diallyldimethylammonium chloride), poly(sodium trimethyleneoxyethylene sulfonate), poly(dimethyldodecyl(2-acrylamidoethyl) ammonium bromide), poly(2-N methylpyridiniumethylene iodine), polyvinylsulfonic acids, and salts of poly(vinyl)pyridines, polyethyleneimines, and polylysines.

Particularly suitable polyelectrolytes for use in the current invention are copolymeric polyelectrolytes, which may be random or block copolymers, wherein said copolymeric polyelectrolyte is a copolymer comprising at least two different types of constitutional units, wherein at least one type of constitutional units comprises ionizable or ionized groups and at least one type of constitutional units is absent of ionizable or ionized groups. Herein "ionizable" is understood to be ionizable in neutral aqueous solutions, i.e. solutions having a pH between 6 and 8. An example of such a copolymeric polyelectrolyte is a poly(acrylamide-co-acrylic acid) salt.

In one embodiment of the invention the hydrophilic coating composition comprises between 0 and 90 wt% or 10-20 wt% of polyelectrolyte based on the total weight of the dry coating.

In the hydrophilic coating formulation the weight ratio of the total weight of hydrophilic polymer and polyelectrolyte (if present) to multifunctional polymerizable compound may for example vary between 1:99 and 99:1, such as between 5:95 and 95:5 or 50:50 and 95:5.

The invention relates to a hydrophilic coating formulation which when applied to a substrate and cured results, according to claim 10, in a hydrophilic coating. Herein a hydrophilic coating formulation refers to a liquid hydrophilic coating formulation, e.g. a solution or a dispersion comprising a liquid medium. Herein any liquid medium that allows application of the hydrophilic coating formulation on a surface would suffice. Examples of liquid media are alcohols, like methanol, ethanol, propanol, butanol or respective isomers and aqueous mixtures thereof, acetone, methylethyl ketone, tetrahydrofuran, dichloromethane, toluene, and aqueous mixtures or emulsions thereof or water. The hydrophilic coating formulation further comprises components which when cured are converted into the hydrophilic coating, and thus remain in the hydrophilic coating after curing. Herein curing is understood to refer to physical or chemical hardening or solidifying by any method, for example heating, cooling, drying, crystallization or curing as a result of a chemical reaction, such as radiation-curing or heat-curing. In the cured state all or part of the components in the hydrophilic coating formulation may be cross-linked forming covalent linkages between all or part of the components, for example by using UV or electron beam radiation. However, in the cured state all or part of the components may also be ionically bonded, bonded by dipole-dipole type interactions, or bonded via Van der Waals forces or hydrogen bonds.

The term "to cure" includes any way of treating the formulation such that it forms a firm or solid coating. In particular, the term includes a treatment whereby the hydrophilic polymer further polymerizes, is provided with grafts such that it forms a graft polymer and/or is cross-linked, such that it forms a cross-linked polymer.

The invention also relates to a hydrophilic coating obtainable by applying the hydrophilic coating formulation according to the invention to a substrate and curing it. The invention further relates to a lubricious coating obtainable by applying a wetting fluid to said hydrophilic coating. Further the invention relates to an article, in particular a medical device or a medical device component comprising at least one hydrophilic coating according to the invention and to a method of forming on a substrate the hydrophilic coating according to the invention.

The hydrophilic coating comprises a supporting network. Said hydrophilic coating is formed by curing a hydrophilic coating formulation comprising the multifunctional polymerizable compound, the Norrish Type I photoinitiator and the Norrish Type II photoinitiator. If a hydrophilic polymer and/or a polyelectrolyte is present these may also be covalently linked and/or physically bound to one or more of the other components and/or entrapped to form a polymer network after curing.

The fact that the multifunctional polymerizable compound and optionally the hydrophilic polymer and/or polyelectrolyte are covalently and/or physically bound in the hydrophilic coating as part of a polymer network has the advantage that they will not leak out into the environment of the hydrophilic coating, for example when it is coated on a medical device. This is particularly useful when the medical device is inside the human or animal body.

In one embodiment of the invention the hydrophilic coating formulation according to the invention further comprises at least one surfactant, which can improve the surface properties of the coating. Surfactants constitute the most important group of detergent components. Generally, these are water-soluble surface-active agents comprised of a hydrophobic portion, usually a long alkyl chain, attached to hydrophilic or water solubility enhancing functional groups. Surfactants can be categorized according to the charge present in the hydrophilic portion of the molecule (after dissociation in aqueous solution): ionic surfactants, for example anionic or cationic surfactants, and non-ionic surfactants. Examples of ionic surfactants include Sodium dodecylsulfate (SDS), Sodium cholate, Bis(2-ethylhexyl)sulfosuccinate Sodium salt, Cetyltrimethylammoniumbromide (CTAB), Lauryldimethylamine-oxide (LDAO), N-Lauroylsarcosine Sodium salt and Sodium deoxycholate (DOC). Examples of non-ionic surfactants include Alkyl Polyglucosides such as TRITON™ BG-10 Surfactant and TRITON CG-110 Surfactant, Branched Secondary Alcohol Ethoxylates such as TERGITOL™ TMN Series, Ethylene Oxide / Propylene Oxide Copolymers, such as TERGITOL L Series, and TERGITOL XD, XH, and XJ Surfactants, Nonylphenol Ethoxylates such as TERGITOL NP Series, Octylphenol Ethoxylates, such as TRITON X Series, Secondary Alcohol Ethoxylates, such as TERGITOL 15-S Series and Specialty Alkoxylates, such as TRITON CA Surfactant, TRITON N-57 Surfactant, TRITON X-207 Surfactant, Tween 80 and Tween 20.

In the above embodiment typically 0.001 to 1 wt% of surfactant can be applied, preferably 0.05-0.5 wt%, based on the total weight of the dry coating.

In one embodiment of the invention the hydrophilic coating formulation according to the invention further comprises at least one plasticizing agent, which can enhance the flexibility of the coating, which may be preferable when the object to be coated is likely to bend during use. Said plasticizing agent may be included in the hydrophilic coating formulation in a concentration of from 0.01 wt% to 15 wt% based on the total weight of the dry coating, preferably from 1 wt% to 5.0 wt%. Suitable plasticizers are high boiling compounds, preferably with a boiling point at atmospheric pressure of >200 °C, and with a tendency to remain homogeneously dissolved and/or dispersed in the coating after cure. Examples of suitable plasticizers are mono- and polyalcohols and polyethers, such as decanol, glycerol, ethylene glycol, diethylene glycol, polyethylene glycol and/or copolymers with propylene glycol and/or fatty acids.

The hydrophilic or the lubricious coating according to claims 10 to 14 of the invention can be coated on an article. The hydrophilic coating can be coated on a substrate which may be selected from a range of geometries and materials. The substrate may have a texture, such as porous, non-porous, smooth, rough, even or uneven. The substrate supports the hydrophilic coating on its surface. The hydrophilic coating can be on all areas of the substrate or on selected areas. The hydrophilic coating can be applied to a variety of physical forms, including films, sheets, rods, tubes, molded parts (regular or irregular shape), fibers, fabrics, and particulates. Suitable surfaces for use in the invention are surfaces that provide the desired properties such as porosity, hydrophobicity, hydrophilicity, colorisability, strength, flexibility, permeability, elongation abrasion resistance and tear resistance. Examples of suitable surfaces are for instance surfaces that consist of or comprise metals, plastics, ceramics, glass and/or composites. The hydrophilic coating may be applied directly to the said surfaces or may be applied to a pretreated or coated surface where the pretreatment or coating is designed to aid adhesion of the hydrophilic coating to the substrate.

In one embodiment of the invention the hydrophilic coating according to the invention is coated on a biomedical substrate. A biomedical substrate refers, in part, to the fields of medicine, and the study of living cells and systems. These fields include diagnostic, therapeutic, and experimental human medicine, veterinary medicine, and agriculture. Examples of medical fields include ophthalmology, orthopedics, and prosthetics, immunology, dermatology, pharmacology, and surgery; non-limiting examples of research fields include cell biology, microbiology, and chemistry. The term "biomedical" also relates to chemicals and compositions of chemicals, regardless of their source, that (i) mediate a biological response in vivo, (ii) are active in an in vitro assay or other model, e.g., an immunological or pharmacological assay, or (iii) can be found within a cell or organism. The term "biomedical" also refers to the separation sciences, such as those involving processes of chromatography, osmosis, reverse osmosis, and filtration. Examples of biomedical articles include research tools, industrial, and consumer applications. Biomedical articles include separation articles, implantable articles, and ophthalmic articles. Ophthalmic articles include soft and hard contact lenses, intraocular lenses, and forceps, retractors, or other surgical tools that contact the eye or surrounding tissue. A preferred biomedical article is a soft contact lens made of a silicon-containing hydrogel polymer that is highly permeable to oxygen. Separation articles include filters, osmosis and reverse osmosis membranes, and dialysis membranes, as well as bio-surfaces such as artificial skins or other membranes. Implantable articles include catheters, and segments of artificial bone, joints, or cartilage. An article may be in more than one category, for example, an artificial skin is a porous, biomedical article. Examples of cell culture articles are glass beakers, plastic petri dishes, and other implements used in tissue cell culture or cell culture processes. A preferred example of a cell culture article is a bioreactor micro-carrier, a silicone polymer matrix used in immobilized cell bioreactors, where the geometry, porosity, and density of the particulate micro-carrier may be controlled to optimize performance. Ideally, the micro-carrier is resistant to chemical or biological degradation, to high impact stress, to mechanical stress (stirring), and to repeated steam or chemical sterilization. In addition to silicone polymers, other materials may also be suitable. This invention may also be applied in the food industry, the paper printing industry, hospital supplies, diapers and other liners, and other areas where hydrophilic, wettable, or wicking articles are desired.

A medical device can be an implantable device or an extracorporeal device. The devices can be of short-term temporary use or of long-term permanent implantation. In certain embodiments, suitable devices are those that are typically used to provide for medical therapy and/or diagnostics in heart rhythm disorders, heart failure, valve disease, vascular disease, diabetes, neurological diseases and disorders, orthopedics, neurosurgery, oncology, ophthalmology, and ENT surgery.

Suitable examples of medical devices include, but are not limited to, a stent, stent graft, anastomotic connector, synthetic patch, lead, electrode, needle, guide wire, catheter, sensor, surgical instrument, angioplasty balloon, wound drain, shunt, tubing, infusion sleeve, urethral insert, pellet, implant, blood oxygenator, pump, vascular graft, vascular access port, heart valve, annuloplasty ring, suture, surgical clip, surgical staple, pacemaker, implantable defibrillator, neurostimulator, orthopedic device, cerebrospinal fluid shunt, implantable drug pump, spinal cage, artificial disc, replacement device for nucleus pulposus, ear tube, intraocular lens and any tubing used in minimally invasive surgery.

Articles that are particularly suited to be used in the present invention include medical devices or components such as catheters, for example intermittent catheters, balloon catheters, PTCP catheters, stent delivery catheters; guide wires, stents, syringes, metal and plastic implants, contact lenses and medical tubing.

The hydrophilic coating formulation can be applied to the substrate by for example dip-coating. Other methods of application include spray, wash, vapor deposition, brush, roller and other methods known in the art.

The thickness of the hydrophilic coating according to the invention may be controlled by altering the soaking time, drawing speed, or viscosity of the hydrophilic coating formulation and the number of coating steps. Typically the thickness of a hydrophilic coating on a substrate ranges from 0.1-300 µm, preferably 0.5-100 µm, more preferably 1-30 µm.

The invention further relates to a method of forming on a substrate a hydrophilic coating which has a low coefficient of friction when wetted with a water-based liquid.

To apply the hydrophilic coating on the substrate, a primer coating may be used in order to provide a binding between the hydrophilic coating and the substrate. The primer coating is often referred to as the primary coating, base coat or tie coat. Said primer coating is a coating that facilitates adhesion of the hydrophilic coating to a given substrate, as is described in for example WO02/10059. The binding between the primer coating and the hydrophilic coating may occur due to covalent or ionic links, hydrogen bonding, physisorption or polymer entanglements. These primer coatings may be solvent based, water based (latexes or emulsions) or solvent free and may comprise linear, branched and/or cross-linked components. Typical primer coatings that could be used comprise for example polyether sulfones, polyurethanes, polyesters, including polyacrylates, as described in for example US6,287,285, polyamides, polyethers, polyolefins and copolymers of the mentioned polymers.

In particular, the primer coating comprises a supporting polymer network, the supporting network optionally comprising a functional hydrophilic polymer entangled in the supporting polymer network as described in WO2006/056482 A1. The information with respect to the formulation of the primer coating is herewith incorporated by reference.

A primer coating as described above is in particular useful for improving adherence of a coating comprising a hydrophilic polymer such as a polylactam, in particular PVP and/or another of the above identified hydrophilic polymers, in particular on polyvinylchloride (PVC), silicone, polyamide, polyester, polyolefin, such as polyethylene, polypropylene and ethylene-propylene rubber (e.g. EPDM), or a surface having about the same or a lower hydrophilicity.

In general there is no restriction as to the thickness of the primer coating, but typically the thickness is less than 5 µm, less than 2 µm or less than 1 µm.

In an embodiment, the surface of the article is subjected to oxidative, photo-oxidative and/or polarizing surface treatment, for example plasma and/or corona treatment in order to improve the adherence of the coating which is to be provided. Suitable conditions are known in the art.

Application of the formulation of the invention may be done according to claim 15. Curing conditions can be determined, based on known curing conditions for the photo-initiator and polymer or routinely be determined.

Preferably, the hydrophilic coating can be formed on a substrate by:
- applying a coating formulation according to the invention to at least one surface of the substrate;
- and allowing the coating formulation to cure by exposing the formulation to electromagnetic radiation thereby activating the initiator.

In general, curing may be carried out at any suitable temperature depending on the substrate, as long as the mechanical properties or another property of the article are not adversely affected to an unacceptable extent.

intensity and wavelength of the electromagnetic radiation can routinely be chosen based on the photoinitiator of choice. In particular, a suitable wavelength in the UV, visible or IR part of the spectrum may be used.

The invention will be further illustrated by the following examples.

### Examples

A primer coating formulation was prepared as indicated below.

**Primer coating formulation (Example 1 and Comparative Experiments A and B)**

| | |
|---|---|
| PTGL1000(T-H)₂ * | : 5.00 % (w/w) |
| Irgacure 2959 (Aldrich) | : 0.20 % (w/w) |
| Ethanol (Merck, 96 % extra pure PH EUR, BP) | : 94.8 % (w/w) |

| | |
|---|---|
| * Synthesized as described below | |

The above mentioned components were added to a brown colored glass flask and mixed overnight (∼16 hours) at room temperature. The next morning the primer formulation was a homogeneous liquid with a viscosity of 7 mPa.s. Herein the viscosity was measured on a Brookfield CAP1000, v.1.2 in combination with cone nr. 1 at 25 °C.

The above primer coating formulation was applied to Pebax ® 7233 catheter tubing (shafts) with an outer diameter of 0.034" (0.86mm) using a Harland 175-24 PCX coater. The application parameters were used as listed in Table 1.

**Table 1. Application conditions of the primer coating formulation**

| | Primer coating formulation |
|---|---|
| Solids primer [w/w %] | 5 |
| Viscosity [mPa.s] | 7 |
| Draw speed primer [cm/s] | 1.0 |
| Cure time primer [s] | 15 |

### Synthesis of PTGL1000(T-H)₂

In a dry inert atmosphere toluene diisocyanate (TDI or T, Aldrich, 95% purity, 87.1 g, 0.5 mol), Irganox 1035 (Ciba Specialty Chemicals, 0.58 g, 1 wt% relative to hydroxy ethyl acrylate (HEA or H)) and tin(II) 2-ethyl hexanoate (Sigma, 95% purity, 0.2 g, 0.5 mol) were placed in a 1 liter flask and stirred for 30 minutes. The reaction mixture was cooled to 0 °C using an ice bath. HEA (Aldrich, 96 % purity, 58.1 g, 0.5 mol) was added dropwise in 30 min, after which the ice bath was removed and the mixture was allowed to warm up to room temperature. After 3 h the reaction was complete. Poly(2-methyl-1,4-butanediol)-alt-poly(tetramethyleneglycol) (PTGL1000, Hodogaya, Mₙ = 1000 g/mol, 250 g, 0.25 mol) was added dropwise in 30 min. Subsequently the reaction mixture was heated to 60 °C and stirred for 18 h, upon which the reaction was complete as indicated by GPC (showing complete consumption of HEA), IR (displayed no NCO related bands) and NCO titration (NCO content below 0.02 wt%).

### Example 1

A hydrophilic coating formulation was prepared comprising a multifunctional polymerizable compound according to Formula (1) (a), a Norrish Type I photoiniatiator (b) (Irgacure 2959) and a Norrish Type II photoinitiator (c) (benzophenone).

| | |
|---|---|
| PEG1500 diacrylamide ** | 2.00 wt% |
| Polyvinylpyrollidone (PVP, 1.3M, Aldrich) | 1.33 wt% |
| PAcA | 0.67 wt% |
| Benzophenone (Aldrich) | 0.08 wt% |
| Irgacure 2959 | 0.04 wt% |
| Tween 80 (surfactant, Merck) | 0.04 wt% |
| Water | 47.92 wt% |
| MeOH (Merck pa) | 47.92 wt% |

| | |
|---|---|
| ** Synthesized as described below | |

### Comparative Experiment A

For comparison hydrophilic coating formulation A was prepared without Norrish Type II photoinitiator.

| | |
|---|---|
| PEG1500 diacrylamide** | 2.00 w% |
| PVP 1.3M | 1.33 w% |
| PAcA | 0.67 w% |
| Benzophenone | ------ |
| Irgacure 2959 | 0.04 w% |
| Tween 80 | 0.04 w% |
| Water | 47.96 w% |
| MeOH | 47.96 w% |

| | |
|---|---|
| ** Synthesized as described below. | |

### Comparative Experiment B

The coating formulation for Comparative Experiment B was prepared without Norrish Type II photoinitiator (c) and with a multifuctuional polymerizable compound different from Formula (1).

| | |
|---|---|
| PEGDA* | 2.00 w% |
| PVP 1.3M | 1.33 w% |
| PAcA | 0.67w% |
| Benzophenone | ------ |
| Irgacure 2959 | 0.04 w% |
| Tween 80 | 0.04 w% |
| Water | 47.96 w% |
| MeOH | 47.96 w% |

| | |
|---|---|
| * Synthesized as described below. | |

The above mentioned components of Example 1 and Comparative Experiments A and B were added to brown colored glass flasks and mixed overnight (-16 hours) at room temperature. The next morning the hydrophilic coating formulations were homogeneous liquids with a viscosity as indicated in table 2. Herein the viscosity was measured on a Brookfield CAP1000, v.1.2 in combination with cone nr. 1 at 25 °C.

### Synthesis of PEG1500 diacrylamide

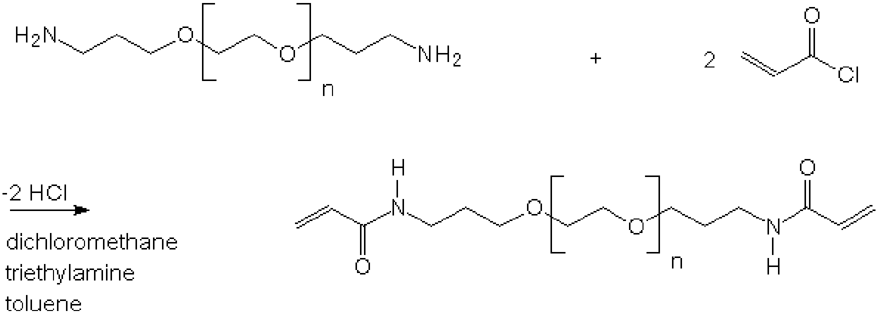

20 g (13.3 mmol) of (polyethylene glycol)bis(3-aminopropyl)terminated (PEG1500-diamine, Mₙ = 1500 g/mol, Aldrich, 34901-14-9) was azeotropically distilled in 400 mL of toluene under nitrogen, removing about 100 mL of toluene. The solution was cooled at room temperature under nitrogen and then cooled in an ice bath. 50 mL of dichloromethane (Merck) were added. 4.04 g (39.7 mmol) of triethylamine was added dropwise followed by the dropwise addition of 3.48 g (39.7 mmol) of acryloyl chloride (used without further purification). The reaction proceeded overnight under nitrogen. The solution was cooled in an ice bath to precipitate NEt₃.HCl salts and was then filtrated. After adding 1% (w/w) Irganox 1035, the filtrate was concentrated under vacuum. The concentrate was redissolved in 75 mL of dichloromethane, followed by precipitation in 1.5 L ice cold diethyl ether. The product was collected by filtration and subsequent washing with diethyl ether.
¹H-NMR (CDCl₃, 22°C) δ (TMS) = 6.7 ppm (2H, -NH-); 6.2 & 6.1 ppm (4 H, CH₂=CH-); 5.6 ppm (2H, CH₂=CH-); 3.6 ppm (164H, -O-CH₂-CH₂- and -O-CH₂-CH₂-CH₂-); 1.8 ppm (4H, -O-CH₂-CH₂-CH₂-).

The NMR spectrum confirmed the formation of PEG1500 diacrylamide. From the integration of the NMR peaks at 6.2 and 6.1 ppm, respectively 1.8 ppm, about 99% of the PEG-diamine was estimated to be converted into PEG1500 diacrylamide.

The IR spectrum confirmed the formation of PEG1500 diacrylamide.

### Synthesis of PEG4000DA

150 g (75 mmol OH) of polyethyleneglycol (PEG4000, Biochemika Ultra from Fluka, OH value 28.02 mg KOH/g, 499.5 mew/kg, Mₙ = 4004 g/mol) was dissolved in 350 ml of dry toluene at 45 °C under nitrogen atmosphere. 0.2 g (0.15 wt%) of Irganox 1035 was added as a radical stabilizer. The resulting solution was distilled azeotropically overnight (50 °C, 70 mbar) leading the condensed toluene over 4A mol sieves. For each batch of PEG the OH value was accurately determined by OH titration, which was performed according to the method described in the 4^{th} edition of the European Pharmacopoeia, paragraph 2.5.3, Hydroxyl Value, page 105. This made it possible to calculate the amount of acryloyl chloride to be added and to determine the degree of acrylate esterification during the reaction. 9.1 g (90 mmol) of triethylamine was added to the reaction mixture, followed by a dropwise addition of 8.15 g (90 mmol) of acryloyl chloride dissolved in 50 ml of toluene in 1 h. Triethylamine and acryloyl chloride were colorless liquids. The reaction mixture was stirred for 2 to 4 h at 45 °C under nitrogen atmosphere. During the reaction the temperature was kept at 45 °C to prevent crystallization of PEG. To determine the conversion a sample was withdrawn from the reaction mixture, dried and dissolved in deuterated chloroform. Trifluoro acetic anhydride (TFAA) was added and a ¹H-NMR spectrum was recorded. TFAA reacts with any remaining hydroxyl groups to form a trifluoro acetic ester, which can be easily detected using ¹H-NMR spectroscopy (the triplet signal of the methylene protons in the α-position of the trifluoro acetic acid group (g, 4.45 ppm) can be clearly distinguished from the signal of the methylene groups in the α-position of the acrylate ester (d, 4.3 ppm)). At a degree of acrylate esterification lower than 98 % an additional 10 mmol of acryloyl chloride and triethylamine were added to the reaction mixture allowing it to react for 1 h. At a degree of acrylate esterification higher than 98 % the warm solution was filtered to remove triethylamine hydrochloride salts. Approximately 300 ml of toluene was removed under vacuum (50 °C, 20 mbar). The remaining solution was kept at 45 °C in a heated dropping funnel and added dropwise to 1 liter of diethyl ether (cooled in an ice bath). The ether suspension was cooled for 1 h before PEG4000DA was obtained by filtration. The product was dried overnight at room temperature under reduced air atmosphere (300 mbar). Yield: 80-90 % as white crystals.

The hydrophilic coating formulations of Example 1 and Comparative Experiments A and B were applied on the Pebax® 7233 shafts with primer coating using a Harland 175-24 PCX coater. The relevant application conditions used are represented in Table 2.

**Table 2: Application conditions for hydrophilic coating formulations 1, A and B.**

| | 1 | A | B |
|---|---|---|---|
| Solids topcoat [w/w %] | 4 | 4 | 4 |
| Viscosity [mPa.s] | 23 | 21 | 24 |
| Draw speed topcoat [cm/s] | 1.0 | 1.0 | 1.0 |
| Cure time topcoat [s] | 360 | 360 | 360 |

The coated length of the Pebax catheter shafts was 27 cm for the primer coating and the hydrophilic coating.

On average the UV light intensity in the PCX coater was 60 mW/cm² between 250-400nm, measured with a Harland UVR335 (IL1400) light meter in combination with detector SED005#989 and filter WBS320#27794. The primer coating was exposed 15 seconds, while the topcoat was exposed 360 seconds to the UV light. This correspondings with a UV-dose of respectively 0.9 J/cm² and 21.6 J/cm². During the application the temperature was 21 °C and 50% RH. For applied coating parameters see Table 3.

**Table 3. Applied process parameters in PCX coater**

| Harland Coating parameters selection table | | | |
|---|---|---|---|
| Dipping Cycle | Primer | Hydrophilic coating | Units |
| Move device carrier to position | 134.5 | 134.5 | Cm |
| Speed | 6.5 | 6.5 | cm/sec |
| Acceleration time | 0.1 | 0.1 | Sec |
| Operator Prompt | "Remove dip cover" | | |
| Operator Prompt | "Switch funnels" | | |
| Move device carrier down | 24.5 | 24.5 | Cm |
| Speed | 4 | 4 | cm/sec |
| Acceleration time | 0.1 | 0.1 | cm/sec/sec |
| Operator Prompt | Check align funnels ment of the de vices above the funnels | | |
| Move device carrier down | 27 | 27 | Cm |
| Speed | 2 | 2 | 0cm/sec |
| Acceleration time | 0.1 | 0.1 | Sec |
| Time Pause | 10 | 10 | Sec |
| Move device carrier up | 30 | 30 | |
| Speed | 1.0 | 1.0 | cm/sec |
| Acceleration time | 0.1 | 0.1 | Sec |
| Move device carrier to position | 170 | 170 | Cm |
| Speed | 6.5 | 6.5 | cm/sec |
| Acceleration time | 0.1 | 0.1 | Sec |
| Operator Prompt | "Close doors" | | |

| | | | |
|---|---|---|---|
| Cure Cycle | | | |
| Rotator On | 4 | 4 | Rpm |
| UV lights Full Power | E - G and L - N | | |
| Time pause | 15 | 360 | Sec |
| Close Shutter | | | |
| UV lights Standby Power | E - G and L - N | | |
| Rotator Off | | | |

The coated catheter shafts were tested in a particulate release test as described below.

### Sample preparation for particulates release test

10 g of Congo-red was weighed and dissolved in 1 L of milli-Q purified water in a measuring flask. The resulting 1 wt% Congo-red solution was used to dye the hydrophilic coatings on the coated Pebax^{™} catheter shafts. The coated catheter shafts were impregnated in this solution for 30 minutes. The coated catheter shafts were air dried for 15 minutes. Wetting again in purified water was performed to remove the excess of Congo-red. Now the coated catheter shafts were air dried again to an extend that they showed no stickiness (approximately 1 hour). The congo-red coloured coated catheter shafts were exposed to the wear test described below.

### Particulates release wear test

The particulates release wear test was conducted on a Zwick 1474 ZmartPro tensile tester with 10N KAP-Z loadcell (hereinafter referred to as "Zwick tensile tester", see Figure 1). The following materials and set-up were used:
- 950 mm of 0.022" (0.56 mm) Nitinol SE metal guide wire (diameter 0.0022", New England Precision Grinding) as reinforcing core wire inside each coated catheter shaft.
- 625 mm top-part of Medtronic Pro-Flo 6F pigtail 2.00 mm, 110 cm, cardiovascular angiographic catheter (hereinafter referred to as "Pro-Flo guiding catheter" or, in Figure 1, "Pro-Flo guiding catheter") as outer counter surface for the wear test. The connector on the proximal end was used to connect a syringe.
- 60 ml of Milli-Q water.
- Mould to support the outer catheter in the Zwick 1474 ZmartPro tensile tester. The mould has a 180 °C curvature of ∅40mm.
- 150 mm of coated catheter shaft (in Figure 1: "colored CV catheter shaft") as described above.

The coated catheter shaft was glued onto the Nitinol guide wire using Loctite, to prevent sliding of the coated catheter shaft during testing, 200 mm from the end of the Nitinol guide wire (from the load cell). This ensured that the coated catheter shaft was placed just before entering the ∅ 40 mm curvature when inserting into the test set-up (see Figure 1). The coated catheter shaft was placed in milli-Q water for 30 seconds to ensure proper wetting of the hydrophilic coating. During wetting of the sample for 30 seconds, the Congo-red indicator partly dissolved in the water. The Nitinol guide wire and the glued coated catheter shaft were inserted into the straightened and pre-wetted Pro-Flo guiding catheter, at the catheter entrance part. The Pro-Flo guiding catheter and the inserted coated catheter shaft were placed in the polymer supporting mould, with the specific 180 ° curvature of 40 mm, and extra milli-Q water was carefully flushed into the Pro-Flo guiding catheter to ensure complete wetting of the inner space.

The polymer mould and Pro-Flo guiding catheter comprising the inserted coated catheter shaft were placed into the Zwick tensile tester and attached to the load cell by a clamp, which was placed 350 mm above the top of the mould. The end part of the catheter shaft was now inside the Pro-Flo guiding catheter just before entering the curvature where friction (and wear) mainly takes place.

Using the Zwick tensile tester, the coated catheter shaft was inserted over a length of 100 mm and withdrawn over the same length with a speed of 200 mm/min. One insertion and withdrawal is defined as 1 cycle. Each sample was conducted to the test during 5 cycles.

### Particulates collection

After the particulates release wear test as described above, one side of the Pro-Flo guiding catheter was released from the mould and placed above a jar collecting the milli-Q water out of the Pro-Flo guiding catheter. A syringe, containing 10 ml of milli-Q water was attached to the catheter entrance part of the Pro-Flo guiding catheter, flushing the Pro-Flo guiding catheter. The Nitinol guide wire and attached coated catheter shaft were removed and flushed with 10ml of milli-Q water. The Pro-Flo guiding catheter was flushed with 4x 10ml of milli-Q water. The 60 ml of collected milli-Q water was subjected to particulates measurements (see below), while the Pro-Flo guiding catheter was dried for further visual check of contamination with coloured particles. No particles were found.

A 0.45-micron Millipore filter type HAWP was used to filter the collected milli-Q water solution. With this filter also particles smaller than 10 micron are collected, while such small particles do not need to be included in the counting according to the USP28 standard. However, the image analysis as described below could clearly distinguish between sizes bigger and smaller than 10 micron. A Millipore glass Büchner funnel system was used for this procedure.

The filter was wetted with pure water first to make sure the filter did not colour red too much. A slightly pink colour could not be prevented. This background colour was corrected with the white and colour balance. This correction did not affect the final result.

### Imaging

Microscopy images were recorded using a LEICA MA FLIII equipped with a CC-12 Soft Imaging System. The filter was illuminated in 180 ° backscattering mode with a LEICA CLS 150X with light guides fixed to the microscope. The upper switch was set on value 4 and the lower was set at position 6. A 10x ocular was used and the zoom factor was 5. The white balance was auto set using white paper. The illumination time per photo capture was set at 3.900 ms. The filter was partially imaged with 9 photos in total representing an area of 2.71 x 2.12 mm equals 5.7 mm² each. A piece of paper with a grid of 9 sections was placed under the filter enabling to record images out of every section. The total filter surface is 1020 mm². The correction factor for the total filter is 1020/(9 x 5.75) = 20.

### Image analysis

The image analysis comprised the following steps:
- Background subtraction
- Object analysis
- Data visualization

Due to a varying background due to variation in Congo-red dye absorption by the filter, a background correction had to be Performed.

Opening the image in Bersoft imaging software "Image Measurement Professional 4.02" and taking a pixel slice through the center revealed the background curvature. The following procedure was used: a vertical and a horizontal slice were taken through the approximate center of the image. The pixel values were exported to Excel, wherein a fit was made of both slices.

The quadratic curves were then used in a Mathematica Workbook to subtract the background (see code below).
Mathematica code used for the background subtraction.

```
 fMain=Import["D:\\image.jpg"];
 fTotal=fMain; {n1,n2,n3}=Dimensions[fMain[[1,1]]];
 nx=n 1; ny=n2;
 (*-- Fit of Red background--*)
 tabelRed=Table[fMain[[1,1,x,y,1]],{x,nx},{y,ny}];
 (*---Generate table t.b.v. "Fit". *)
 tabelFit=Flatten[Table[{x,y,tabelRed[[x,y]]},{x,nx},{y,ny}],1];
 (*---Fit, calculate parameters. *)
 opl=Fit[tabelFit,{1,x,x^2,y,y^2},{x,y}];
 r0=opl[[1]]; {r1,r2,r3,r4}=Table[opl[[i,1]],{i,2,5}];
 Print["pLijst=",{r0,r1,r2,r3,r4}];
 tabelRed=.
 tabelFit=.
 fTotal[[1,1]]=Table[{Abs[(fMain[[1,1,i,j,3]]-(r0+r1*i+r2*i^2+r3*j+r4*j^2)-10)*2-40],0,0},
                 {i,n1},{j,n2}];
                 Export["D:\\BackgroundRSubtracted.jpg",fTotal,"JPEG"];
                 fTotal=.
                 fMain=.
                 opl=.
```

All RGB colours were combined to one value and put in RGB Red. The resulting picture was saved as a JPG file. The image was then opened in Bersoft imaging software to detect all objects which had a RGB Red pixel value above 24. The level was chosen such that it is just above the remaining overall background value.

After analyzing all objects, the data was exported to Excel wherein the visualization is done. The result of all nine images was put together and corrected for the fraction of the total filter surface.

### Interpretation

Particles were analyzed on the filter. Particles which were smaller than 10 micron in all directions were ignored according to the USP28. Particles which were larger than 10 micron in at least one direction were counted and related to the USP28 standard. Particle surfaces were converted to particle volumes, assuming that the particles were rigid spheres. It was taken into account that the catheter has a coating thickness of 2 micron.

### Criteria:

- Particles > 10 micron (particle volume between 500 µm³ and 8000 µm³): less than 3000 per release test (= per filter).
- Particles > 25 micron (particle volume > 8000 µm³): less than 300 per release test (= per filter).

### Particulate release wear test results of Example 1 and Comparative Experiments A and B

The hydrophilic coatings 1, A and B on the catheter shafts were all subjected to the particulates release wear test as described above. The particulates release of the coatings is represented in Table 4.

**Table 4: Particulates count related to the USP criteria**

| Sample | > 10 micron | > 25 micron | Passed |
|---|---|---|---|
| Example 1 | 260 | 0 | Yes |
| Comparative example A | 820 | 40 | Conditional |
| Comparative example B | 6340 | 1260 | No |

The table shows the large reduction in particulates release obtained with the coating according to the invention.

## Claims

1. Coating formulation for preparing a hydrophilic coating, wherein the hydrophilic coating formulation comprises
(a) at least one multifunctional polymerizable compound according to formula (1) 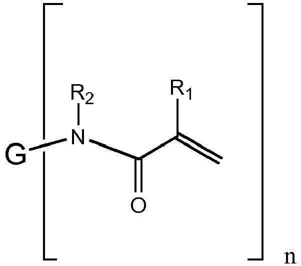 wherein G is a residue of a polyfunctional compound having at least n functional groups; wherein each R₁ and each R₂ independently represents hydrogen or a group selected from substituted and unsubstituted hydrocarbons which optionally contain one or more heteroatoms and wherein n is an integer having a value of at least 2,
(b) at least one Norrish Type I photoinitiator; and
(c) at least one Norrish Type II photoinitiator.

2. Coating formulation according to claim 1, wherein the Norrish Type I photoinitiator is chosen from the group consisting of benzoin derivatives, methylolbenzoin and 4-benzoyl-1,3-dioxolane derivatives, benzilketals, α,α-dialkoxyacetophenones, α-hydroxy alkylphenones, α-aminoalkylphenones, acylphosphine oxides, bisacylphosphine oxides, acylphosphine sulphides, and halogenated acetophenone derivatives.

3. Coating formulation according to claim 1 or claim 2, wherein the Norrish Type II photoinitiator is chosen from the group consisting of aromatic ketones such as benzophenone, xanthone, derivatives of benzophenone, blends of benzophenone and benzophenone derivatives, Michler's Ketone, Ethyl Michler's Ketone, thioxanthone and other xanthone derivatives like Quantacure ITX (isopropyl thioxanthone), benzil, anthraquinones, coumarin, or chemical derivatives or combinations of these photoinitiators.

4. Coating formulation according to any one of claims 1-3, wherein the multifunctional polymerizable compound according to formula (1) has a number average molecular weight (Mn) of 500 g/mol or more and/or has a number average molecular weight (Mn) of 2000 g/mol or less (as determined by light scattering, optionally in combination with Size Exclusion Chromatography, SEC).

5. Coating formulation according to any one of claims 1-4, wherein G is a residue of a hydrophilic polyfunctional compound, chosen from the group consisting of polyethers, polyesters, polyurethanes, polyepoxides, polyamides, poly(meth)acrylamides, poly(meth)acrylics, polyoxazolidones, polyvinyl alcohols, polyethylene imines, polypeptides and polysaccharides, such as cellulose or starch or any combination of the above.

6. Coating formulation according to any of claims 1-5, wherein G comprises a residue of a hydrophilic polyfunctional compound, chosen from at least one polyethylene glycol or polypropylene glycol block.

7. Coating formulation according to any one of claims 1-6, wherein R₁ = H and R₂ = H or R₁ is CH₃ and R₂ = H.

8. Coating formulation according to any one of claims 1-7, further comprising a non-ionic hydrophilic polymer selected from the group consisting of poly(lactams), polyvinylpyrollidone (PVP), polyurethanes, homo- and copolymers of acrylic and methacrylic acid, polyvinyl alcohol, polyvinylethers, maleic anhydride based copolymers, polyesters, vinylamines, polyethyleneimines, polyethyleneoxides, poly(carboxylic acids), polyamides, polyanhydrides, polyphosphazenes, cellulosics, methyl cellulose, carboxymethyl cellulose, hydroxymethyl cellulose, hydroxypropylcellulose, heparin, dextran, polypeptides, collagens, fibrins, elastin, polysacharrides, chitosan, hyaluronic acid, alginates, gelatin, and chitin, polyesters, polylactides, polyglycolides, and polycaprolactones, polypeptides, collagen, albumin, oligo peptides, short chain peptides, proteins, and oligonucleotides.

9. Coating formulation according to any one of claims 1-8, further comprising a hydrophilic polymer and/or a polyelectrolyte, wherein the weight ratio of hydrophilic polymer and polyelectrolyte (if present) to the multifunctional polymerizable compound is between 50:50 and 95:5.

10. Hydrophilic coating obtainable by curing a hydrophilic coating formulation according to any one of claims 1-9.

11. Lubricious coating obtainable by applying a wetting fluid to a hydrophilic coating according to claim 10.

12. Lubricious coating having a wear resistance, as measured according to the particulates release wear test, corresponding to less than 3000 particles larger than 10 µm.

13. Article comprising at least one hydrophilic coating or lubricious coating according to any one of claims 10-12.

14. Article according to claim 13, wherein the article is a medical device or component, such as a catheter, a guide wire, a stent, a syringe, a metal and plastic implant, a contact lens and a medical tubing.

15. Method of forming a hydrophilic coating on a substrate, the method comprising
- applying a coating formulation according to any one of claims 1-9 to at least one surface of the substrate;
- and allowing the coating formulation to cure by exposing the formulation to electromagnetic radiation thereby activating the initiator.

## Patentansprüche

1. Beschichtungsformulierung für die Herstellung einer hydrophilen Beschichtung, wobei die hydrophile Beschichtungsformulierung umfasst:
(a) wenigstens eine multifunktionelle polymerisierbare Verbindung gemäß Formel (1) 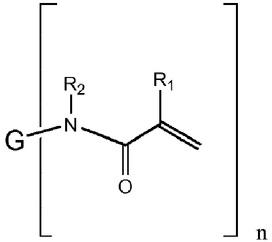 wobei G ein Rest einer polyfunktionellen Verbindung mit wenigstens n funktionellen Gruppen ist; wobei jedes R₁ und jedes R₂ unabhängig Wasserstoff oder eine Gruppe ausgewählt aus substituierten und nichtsubstituierten Kohlenwasserstoffen darstellt, die gegebenenfalls ein oder mehrere Heteroatome enthalten und wobei n eine ganze Zahl mit einem Wert von wenigstens 2 ist,
(b) mindestens einen Norrish-Typ-I-Photoinitiator; und
(c) mindestens einen Norrish-Typ-II-Photoinitiator.

2. Beschichtungsformulierung gemäß Anspruch 1, wobei der Norrish-Typ-I-Photoinitiator ausgewählt ist aus der Gruppe bestehend aus Benzoinderivaten, Methylolbenzoin und 4-Benzoyl-1,3-dioxolanderivaten, Benzilketalen, α,α-Dialkoxyacetophenonen, α-Hydroxyalkylphenonen, α-Aminoalkylphenonen, Acylphosphinoxiden, Bisacylphosphinoxiden, Acylphosphinsulfiden und halogenierten Acetophenonderivaten.

3. Beschichtungsformulierung gemäß Anspruch 1 oder Anspruch 2, wobei der Norrish-Typ-II-Photoinitiator ausgewählt ist aus der Gruppe bestehend aus aromatischen Ketonen, wie z. B. Benzophenon, Xanthon, Derivaten von Benzophenon, Gemischen von Benzophenon und Benzophenonderivaten, Michler-Keton, Ethyl-Michler-Keton, Thioxanthon und anderen Xanthonderivaten wie Quantacure ITX (Isopropylthioxanthon), Benzil, Anthrachinonen, Coumarin und chemischen Derivaten oder Kombinationen dieser Photoinitiatoren.

4. Beschichtungsformulierung gemäß einem der Ansprüche 1-3, wobei die multifunktionelle polymerisierbare Verbindung der Formel (1) ein anzahlgemitteltes Molekulargewicht (Mn) von 500 g/mol und mehr und/oder ein anzahlgemitteltes Molekulargewicht (Mn) von 2000 g/mol und weniger (bestimmt durch Lichtstreuung gegebenenfalls in Kombination mit Größenausschlusschromatographie (SEC)) aufweist.

5. Beschichtungsformulierung gemäß einem der Ansprüche 1-4, wobei G ein Rest einer hydrophilen polyfunktionellen Verbindung ist, ausgewählt aus der Gruppe bestehend aus Polyethern, Polyestern, Polyurethanen, Polyepoxiden, Polyamiden, Poly(meth)acrylamiden, Poly(meth)acrylen, Polyoxazolidonen, Polyvinylalkoholen, Polyethyleniminen, Polypeptiden und Polysacchariden, wie z. B. Cellulose und Stärke, oder jeder Kombination der vorstehend genannten.

6. Beschichtungsformulierung gemäß einem der Ansprüche 1-5, wobei G einen Rest einer hydrophilen polyfunktionellen Verbindung ausgewählt aus mindestens einem Polyethylenglykol- oder Polypropylenglykolblock umfasst.

7. Beschichtungsformulierung gemäß einem der Ansprüche 1-6, wobei R₁ = H und R₂ = H oder R₁ = CH₃ und R₂ = H sind.

8. Beschichtungsformulierung gemäß einem der Ansprüche 1-7, ferner umfassend ein nichtionisches hydrophiles Polymer, ausgewählt aus der Gruppe bestehend aus Poly(lactamen), Polyvinylpyrrolidon (PVP), Polyurethanen, Homo- und Copolymeren von Acryl- und Methacrylsäure, Polyvinylalkohol, Copolymeren auf Maleinsäureanhydridbasis, Polyestern, Vinylaminen, Polyethyleniminen, Polyethylenoxiden, Polypropylenoxiden, Poly(carbonsäuren), Polyamiden, Polyanhydriden, Polyphosphazenen, Cellulosen, Methylcellulose, Carboxymethylcellulose, Hydroxymethylcellulose, Hydroxypropylcellulose, Heparin, Dextran, Polypeptiden, Collagene, Fibrine, Elastin, Polysacchariden, Chitosan, Hyaluronsäure, Alginate, Gelatine und Chitin, Polyestern, Polylactide, Polyglycolide und Polycaprolactone, Polypeptiden, Collagen, Albumin, Oligopeptide, kurzkettige Peptide, Proteine, und Oligonucleotiden.

9. Beschichtungsformulierung gemäß einem der Ansprüche 1-8, ferner umfassend ein hydrophiles Polymer und/oder ein Polyelektrolyt, wobei das Gewichtsverhältnis von hydrophilem Polymer und Polyelektrolyten (falls enthaltend) zur multifunktionellen polymerisierbaren Verbindung zwischen 50 zu 50 und 95 zu 5 beträgt.

10. Hydrophile Beschichtung, erhältlich durch Härten einer hydrophilen Beschichtungsformulierung gemäß einem der Ansprüche 1-9.

11. Gleitfähige Beschichtung, erhältlich durch Auftragen eines benetzenden Fluids auf eine hydrophile Beschichtung gemäß Anspruch 10.

12. Gleitfähige Beschichtung mit einer Verschleißfestigkeit, gemessen in einer unter Bestimmung der Partikelfreisetzung durchgeführten Verschleißprüfung, entsprechend weniger als 3000 Partikel größer 10 µm.

13. Gegenstand, umfassend wenigstens eine hydrophile Beschichtung oder gleitfähige Beschichtung gemäß einem der Ansprüche 10-12.

14. Gegenstand gemäß Anspruch 13, wobei der Gegenstand ein Medizinprodukt oder eine medizinische Komponente, wie ein Katheter, ein Führungsdraht, ein Stent, eine Spritze, ein Metall- und Kunststoffimplantat, eine Kontaktlinse und ein medizinisches Rohr, ist.

15. Verfahren zum Herstellen einer hydrophilen Beschichtung auf einem Substrat, wobei das Verfahren umfasst:
- Auftragen einer Beschichtungsformulierung gemäß einem der Ansprüche 1-9 auf wenigstens eine Oberfläche des Substrats;
- und Härtenlassen der Beschichtungsformulierung durch Exponieren der Formulierung gegenüber elektromagnetischer Strahlung, wodurch der Initiator aktiviert wird.

## Revendications

1. Formulation de revêtement pour la préparation d'un revêtement hydrophile, la formulation de revêtement hydrophile comprenant
(a) au moins un composé polymérisable multifonctionnel selon la formule (1) 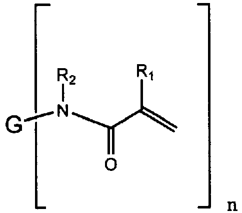 dans laquelle G est un résidu d'un composé polyfonctionnel comportant au moins n groupes fonctionnels ; dans laquelle chaque R₁ et chaque R₂ représente indépendamment hydrogène ou un groupe sélectionné parmi des hydrocarbures substitués et non substitués qui contiennent éventuellement un ou plusieurs hétéroatomes et dans laquelle n est un entier ayant une valeur d'au moins 2,
(b) au moins un photoinitiateur de type Norrish I ; et
(c) au moins un photoinitiateur de type Norrish II.

2. Formulation de revêtement selon la revendication 1, dans laquelle le photoinitiateur de type Norrish I est choisi dans le groupe constitué par les dérivés de benzoïne, la méthylolbenzoïne et les dérivés de 4-benzoyl-1,3-dioxolane, les benzile-cétals, les α,α-dialcoxyacétophénones, les α-hydroxyalkylphénones, les α-aminoalkylphénones, les oxydes d'acylphosphines, les oxydes de bisacylphosphines, les sulfures d'acylphosphines et les dérivés d'acétophénone halogénés.

3. Formulation de revêtement selon la revendication 1 ou la revendication 2, dans laquelle le photoinitiateur de type Norrish II est choisi dans le groupe constitué par les cétones aromatiques telles que la benzophénone, la xanthone, les dérivés de benzophénone, les mélanges de benzophénone et de dérivés de benzophénone, la cétone de Michler, l'éthylcétone de Michler, la thioxanthone et les autres dérivés de xanthone comme le Quantacure ITX (l'isopropylthioxanthone), le benzile, les anthraquinones, la coumarine ou les dérivés chimiques ou associations de ces photoinitiateurs.

4. Formulation de revêtement selon l'une quelconque des revendications 1-3, dans laquelle le composé polymérisable multifonctionnel selon la formule (1) présente une moyenne en nombre du poids moléculaire (Mn) de 500 g/mol ou plus et/ou présente une moyenne en nombre du poids moléculaire (Mn) de 2000 g/mol ou moins (déterminée par diffusion de lumière, éventuellement en combinaison avec une chromatographie d'exclusion (SEC, Size Exclusion Chromatography)).

5. Formulation de revêtement selon l'une quelconque des revendications 1-4, dans laquelle G est un résidu d'un composé polyfonctionnel hydrophile choisi dans le groupe constitué par les polyéthers, les polyesters, les polyuréthanes, les polyépoxydes, les polyamides, les poly(méth)acrylamides, les poly(méth)acryliques, les polyoxazolidones, les poly(alcools vinyliques), les polyéthylèneimines, les polypeptides et les polysaccharides tels que la cellulose et l'amidon ou n'importe quelle association des polymères ci-dessus.

6. Formulation de revêtement selon l'une quelconque des revendications 1-5, dans laquelle G comprend un résidu d'un composé polyfonctionnel hydrophile, choisi parmi au moins un bloc polyéthylèneglycol ou polypropylèneglycol.

7. Formulation de revêtement selon l'une quelconque des revendications 1-6, dans laquelle R₁ = H et R₂ = H ou R₁ est CH₃ et R₂ = H.

8. Formulation de revêtement selon l'une quelconque des revendications 1-7, comprenant en outre un polymère hydrophile non ionique choisi dans le groupe constitué par les poly(lactames), la polyvinylpyrrolidone (PVP), les polyuréthanes, les homopolymères et copolymères de l'acide acrylique et de l'acide méthacrylique, le poly(alcool vinylique), les poly(éthers de vinyle), les copolymères à base d'anhydride maléique, les polyesters, les vinylamines, les polyéthylèneimines, les poly(oxydes d'éthylène), les poly(acides carboxyliques), les polyamides, les polyanhydrides, les polyphosphazènes, les matières cellulosiques, la méthylcellulose, la carboxyméthylcellulose, l'hydroxyméthylcellulose, l'hydroxypropylcellulose, l'héparine, le dextrane, les polypeptides, les collagènes, les fibrines, l'élastine, les polysaccharides, le chitosane, l'acide hyaluronique, les alginates, la gélatine et la chitine, les polyesters, les polylactides, les polyglycolides et les polycaprolactones, les polypeptides, le collagène, l'albumine, les oligopeptides, les peptides à chaîne courte, les protéines et les oligonucléotides.

9. Formulation de revêtement selon l'une quelconque des revendications 1-8, comprenant en outre un polymère hydrophile et/ou un polyélectrolyte, dans laquelle le rapport de poids du polymère hydrophile et du polyélectrolyte (le cas échéant) sur le composé polymérisable multifonctionnel est compris entre 50:50 et 95:5.

10. Revêtement hydrophile pouvant être obtenu par durcissement d'une formulation de revêtement hydrophile selon l'une quelconque des revendications 1-9.

11. Revêtement lubrifiant pouvant être obtenu par application d'un fluide de mouillage sur un revêtement hydrophile selon la revendication 10.

12. Revêtement lubrifiant présentant une résistance à l'usure, mesurée conformément au test d'usure en termes de libération de matières particulaires, correspondant à moins de 3000 particules d'une taille supérieure à 10 µm.

13. Article comprenant au moins un revêtement hydrophile ou revêtement lubrifiant selon l'une quelconque des revendications 10-12.

14. Article selon la revendication 13, l'article étant un dispositif ou composant médical tel qu'un cathéter, un fil guide, une endoprothèse, une seringue, un implant en métal et en plastique, une lentille de contact et une tubulure médicale.

15. Procédé de formation d'un revêtement hydrophile sur un substrat, le procédé comprenant
- l'application d'une formulation de revêtement selon l'une quelconque des revendications 1-9 sur au moins une surface du substrat ;
- et le fait de laisser la formulation de revêtement durcir par exposition de la formulation à un rayonnement électromagnétique ce qui active de cette manière l'initiateur.
